# EUROPÄISCHE PATENTSCHRIFT

(11) **EP 0 565 090 B1**
(45) Veröffentlichungstag und Bekanntmachung des Hinweises auf die Patenterteilung: **25.02.1998**
(21) Anmeldenummer: 93105784.8
(22) Anmeldetag: 07.04.1993
(51) Int. Cl.: G01B 11/02, G01B 11/10, G01B 11/00

(54) **Verfahren und Vorrichtung zur Messung der Abmessung eines Objekts**
Procedure and device to measure the dimensions of an object
Procédé et dispositif pour mesurer les dimensions d'un objet

(30) Priorität: 10.04.1992 CH 189/92
(43) Veröffentlichungstag der Anmeldung: 13.10.1993
(73) Patentinhaber: ZUMBACH ELECTRONIC AG, CH-2552 Orpund (CH)
(72) Erfinder: Käser, Beda, CH-2555 Brügg (CH)
(74) Vertreter: Jaeger, Klaus, Dr.

(56) Entgegenhaltungen:
- EP-A- 0 244 163
- DE-A- 3 520 759
- US-A- 3 870 890
- US-A- 4 432 648
- PATENT ABSTRACTS OF JAPAN vol. 9, no. 72 (P-345)(1795) 2. April 1985; & JP-A-59 203 904

## Beschreibung

Die vorliegende Erfindung betrifft ein Verfahren zur Messung der Abmessung eines Objekts in den Richtungen (x,y), wobei je ein Lichtstrahl in der zu messenden Richtung über das Objekt abgelenkt und aus der Dauer der Unterbrechung des Lichtstrahls durch das Objekt auf dessen Abmessung geschlossen wird. Aus US-A-3870890, US-A-44 32 648 und JP-A-59-203 904 sind Verfahren bzw. Vorrichtungen dieser Art bekannt, wobei die Optik derart gestaltet ist, daß ein telezentrischer Lichtstrahl mit einer bekannten Geschwindigkeit bzw. einem bekannten Geschwindigkeitsverlauf durch das Meßfeld abgelenkt wird, so daß aus der Dauer und Lage der Unterbrechung des Lichtstrahls genau auf die Abmessung und gegebenenfalls die Lage des Objekts geschlossen werden kann.

Zur Erfassung der Abmessungen eines Objekts in mehreren Richtungen, im allgemeinen in zwei rechtwinklig stehenden Richtungen (x,y) wird der, durch ein Ablenkorgan, beispielsweise einen rotierenden oder oszillierenden Spiegel abgelenkte Lichtstrahl, durch ein Objektiv zur Erzeugung eines telezentrischen Lichtstrahls einem Strahlteiler zugeführt, aus welchem zugleich zwei Lichtstrahlen über geeignete Spiegelsysteme ins Meßfeld gelangen, wo sie synchron in zwei rechtwinklig stehenden Richtungen abgelenkt werden. Diese Anordnung benötigt zwar nur eine Lichtquelle und ein Objektiv, doch ist sie mit erheblichen Nachteilen verbunden. Die Aufteilung des Lichtstrahls in zwei Lichtstrahlen und deren Einführung ins Meßfeld über Spiegelsysteme erlaubt keinen kompakten Aufbau der Meßvorrichtung. Es ist schwierig und aufwendig, die Optik so auszubilden und einzustellen, daß die beiden aus einem ein gemeinsames Objektiv durchlaufenden Lichtstrahl entstandenen Lichtstrahlen optimal fokussiert sind. Eine genaue Messung, auch kleinster Abmessungen, erfordert jedoch eine sehr genaue Fokussierung der Lichtstrahlen am Ort des Objekts. Das gemeinsame, vor dem Strahlteiler und den Spiegelsystemen liegende Objektiv ist verhältnismäßig weit vom Objekt und auch von Fenstern im Gehäuse des Meßgerätes entfernt, durch welche die Lichtstrahlen ins Meßfeld austreten. Die beim Objekt fokussierten Lichtstrahlen weisen daher beim Durchtritt durch die Fenster bereits einen verhältnismäßig kleinen Querschnitt auf, so daß eventuelle Verunreinigungen auf diesen Fenstern unter Umständen einen erheblichen störenden Einfluß auf die Lichtstrahlen haben. Wie erwähnt, durchlaufen die beiden Lichtstrahlen das Meßfeld synchron, d.h. die dem Lichtdurchtritt entsprechenden Meßsignale treten praktisch synchron auf und müssen in getrennten Meßkanälen verarbeitet werden.

Ziel vorliegender Erfindung ist es, einen oder mehrere der oben erwähnten Nachteile zu vermeiden. Das wird gemäß Patentanspruch 1 bzw. 6 erreicht.

Vorzugsweise werden die beiden Laserstrahlen separat über ein bewegtes Ablenkorgan geführt, womit der Strahlteiler wegfällt. Es ist eine individuelle optimale Einstellung der gesamten Optik für jeden einzelnen Laserstrahl und damit eine optimale genaue Fokussierung am Ort des Objekts möglich, womit die Meßgenauigkeit erheblich gesteigert werden kann. Zugleich ergibt sich eine kompakte Bauweise.

Die Ablenkung der Laserstrahlen kann derart in zeitlichem Abstand erfolgen, daß auch die jeweilige Messung in verschiedenen Richtungen in zeitlichen Abständen erfolgt, womit die Meßsignale durch einen einzigen Meßkanal verarbeitet werden können.

Weitere Einzelheiten und Vorteile ergeben sich aus der folgenden Beschreibung eines Ausführungsbeispiels der erfindungsgemäßen Meßvorrichtung:
- Fig. 1: zeigt schematisch die Meßvorrichtung,
- Fig. 2: zeigt eine erste Stellung des Ablenkspiegels,
- Fig. 3: zeigt eine weitere Position des Ablenkspiegels und
- Fig. 4: veranschaulicht den zeitlichen Verlauf des aufeinanderfolgenden Durchgangs der zwei Laserstrahlen durch das Meßfeld.

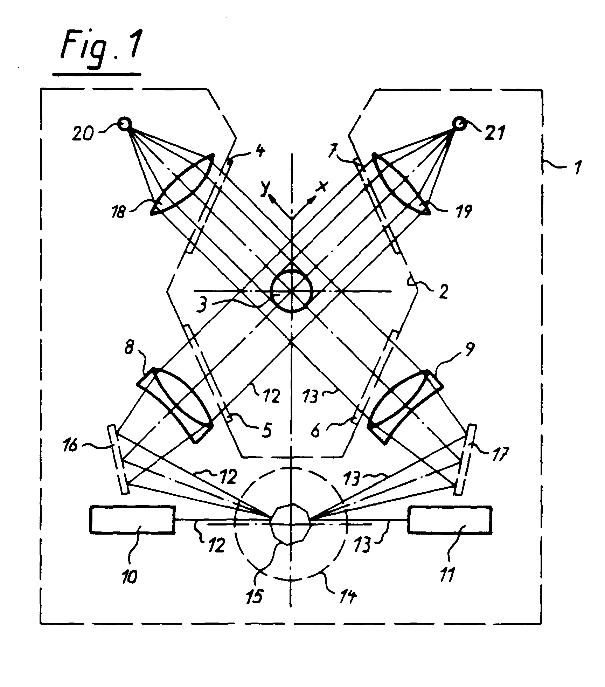

In Fig. 1 ist ein Gehäuse 1 des Meßgerätes angedeutet, in welchem sich die Meßorgane befinden. Das Meßgehäuse weist einen Durchgang 2 mit etwa trapezförmigem Querschnitt auf, durch welchen ein Meßobjekt 3, beispielsweise ein Draht, ein Kabel, ein Lichtleiter oder sonst ein durchlaufendes Produkt durchgeführt werden kann. Entsprechend können aber selbstverständlich auch stationäre Objekte gemessen werden. Im Durchgang 2 weist das Gehäuse vier Fenster, 4-7 auf, durch welche Laserstrahlen durch je zwei gegenüberliegende Fenster durch das Meßfeld durchtreten können wie in Fig. 1 angedeutet. Unmittelbar hinter den unteren Meßfenstern 5 und 6 liegt je ein Objektiv 8, bzw. 9. Die Vorrichtung weist zwei Laser-Lichtquellen, vorzugsweise Halbleiter-Laser 10 und 11, mit je einem nicht dargestellten Kollimator auf, welche je einen Laserstrahl 12 bzw. 13 auf einen, durch einen Motor 14 antreibbaren achteckigen Spiegel 15 werfen. Von diesem Spiegel werden die Laserstrahlen über ortsfeste Spiegel 16, bzw. 17 in die Objektive 8, bzw. 9, gelenkt, in welchen der, in praktisch einem Punkt am Spiegel 15 abgelenkte Laserstrahl in einen telezentrischen, d.h. immer zu sich selber parallelen Lichtstrahl, gebrochen wird. Im Meßfeld stehen die zwei Laserstrahlen 12 und 13 rechtwinklig aufeinander, womit die Abmessungen des Objekts 3 in zwei Koordinatenrichtungen x und y erfaßt werden können. Hinter den Fenstern 4 und 7 befindet sich je eine Sammeloptik 18, bzw. 19, welche den eintretenden Laserstrahl auf einen fotoelektrischen Wandler 20 bzw. 21 wirft. Die Wandler 20 und 21 sind mit einem gemeinsamen Eingang einer nicht dargestellten Meßelektronik verbunden, welche in später erläuterter Weise die eintretenden Meßsignale verarbeitet.

Die grundsätzliche Arbeitsweise der Vorrichtung gemäß Fig. 1 ergibt sich weitgehend aus dem bisher Gesagten. Durch die Rotation des Spiegels 15 werden die Laserstrahlen 12 und 13 periodisch abgelenkt und durchlaufen das Meßfeld. Aus der Dauer, während welcher die Laserstrahlen in den beiden Richtungen x und y durch das Objekt 3 unterbrochen werden, kann auf die Dimension des Objekts in den beiden Richtungen x und y geschlossen werden. Dank der getrennten Führung der Laserstrahlen von je einer Laser-Lichtquelle mit ihrem eigenen Kollimator über den Spiegel 15 und die Objektive 8 und 9 ist eine unabhängige, optimale Einstellung der beiden optischen Systeme möglich. Es ergibt sich damit eine hohe Präzision der Fokussierung der Laserstrahlen am Ort des Objekts 3 und es hat sich gezeigt, daß bei einer praktischen Ausführung Abmessungen von 80 µm - 32 mm mit ein und derselben Vorrichtung sich mit genügender Präzision messen lassen.

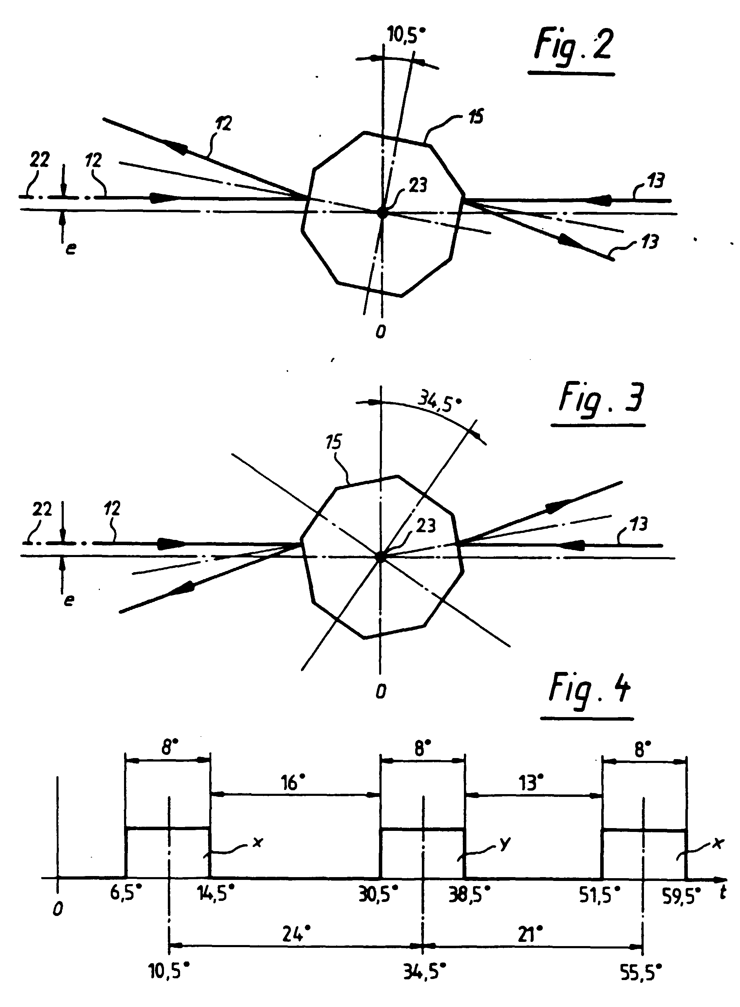

Aus Fig. 1 geht bereits hervor, daß die beiden Laserstrahlen 12 und 13 aus den Quellen 10 und 11 in einer gemeinsamen Achse von entgegengesetzten Seiten auf den Spiegel 15 auftreffen, aber mit einer gewissen Exzentrizität bezogen auf die Drehachse 23 des Spiegels. Diese Situation ist in den Fig. 2 und 3 in größerem Maßstab dargestellt. Demnach weist die optische Achse 22 der beiden Laserstrahlen 12 und 13 eine Exzentrizität e gegenüber der Drehachse 23 des Oktogonalspiegels 15 auf. Fig. 2 zeigt dabei eine Stellung des Spiegels 15, bei welcher der Laserstrahl 12 nach oben über den Spiegel 16 und das Objektiv 8 ins Meßfeld reflektiert wird, während der Laserstrahl 13 nach unten reflektiert wird und unwirksam ist. Es ist angenommen, die Stellung gemäß Fig. 2 entspreche einer Verdrehung des Spiegels 15 um 10,5° aus seiner Nullstellung, und der Winkel zwischen den eintretenden und austretenden Strahlen 12 und 13 würde demnach 21° betragen. Gemäß Fig. 3 ergibt sich die umgekehrte Situation bei einem Drehwinkel von 34,5° des Spiegels 15 aus seiner Nullstellung, d.h. der Laserstrahl 13 wird nun über den Spiegel 17 und das Objektiv 9 in das Meßfeld gelenkt, während der Laserstrahl 12 unwirksam ist. Es ist angenommen, der Strahldurchtritt in das Meßfeld sei jeweils auf 8° symmetrisch zu der in den Fig. 2 und 3 angedeuteten Winkelhalbierenden zu den eintretenden und austretenden Strahlen beschränkt. Diese Verhältnisse sind in Fig. 4 dargestellt, wobei angenommen ist, es befinde sich kein Objekt im Meßgerät. Es treten daher Lichtimpulse, bzw. Ausgangsimpulse der Wandler 20 und 21 während eines Drehwinkels von je 8° auf, wobei diese Impulse symmetrisch zu den Positionen 10,5°, 34,5° und 55,5° liegen. Wie sich aus Fig. 4 ergibt, treten nun diese Impulse infolge der Exzentrizität e nicht in regelmäßigen Abständen auf, sondern der Abstand zwischen je einem paar aufeinanderfolgender Impulse beträgt 24°, während der Abstand zum nächsten Impuls nur 21° beträgt. Entsprechend betragen die Impulsintervalle 16° bzw. 13°. Aus dieser Situation ergeben sich die folgenden Vorteile; Dank des zeitlichen Abstandes zwischen je einem Meßimpuls für die Abmessung x und den Meßimpuls für die Abmessung y kann eine einzige Auswertungselektronik benützt werden. Da außerdem der zeitliche Abstand zwischen zwei aufeinanderfolgenden Meßimpulsen der Gruppe (x,y) von Meßimpulsen vom zeitlichen Abstand zwischen dieser Gruppe von Meßimpulsen und dem ersten Impuls (x) der nächsten Gruppe verschieden groß ist, genügt eine einfache Logik, um die im gemeinsamen Meßkanal berechneten Werte x und y den entsprechenden Anzeigen bzw. entsprechenden Auswertungsschaltungen oder Regelschaltungen zuzuführen.

Während das Ausführungsbeispiel der häufigsten Anwendung, nämlich der Messung in zwei rechtwinkligen Koordinatenrichtungen x und y entspricht, könnte grundsätzlich auch in drei Dimensionen gemessen werden. Anstelle eines rotierenden, mehreckigen Ablenkspiegels 15 könnte ein oszillierender Spiegel vorgesehen sein, welcher beidseitig verspiegelt ist und die beiden Laserstrahlen 12 und 13 abwechslungsweise auf die Spiegel 16, bzw. 17 lenkt.

## Patentansprüche

1. Verfahren zur Messung der Abmessung eines Objekts (3) in zwei Richtungen (x,y), wobei je ein Laserstrahl (12,13) durch ein separates Objektiv (8,9) geführt und in der zu messenden Richtung über das Objekt abgelenkt und aus der Dauer der Unterbrechung des Laserstrahles durch das Objekt auf dessen Abmessung geschlossen wird,
dadurch **gekennzeichnet,**
daß jeder Laserstrahl einer eigenen Laser-Lichtquelle (10,11) entstammt.

2. Verfahren nach Anspruch 1,
dadurch **gekennzeichnet,**
daß die Laserstrahlen (12,13) über ein gemeinsames Ablenkorgan, z.B. einen rotierenden oder oszillierenden Spiegel (15), geführt werden.

3. Verfahren nach Anspruch 1 oder 2,
dadurch **gekennzeichnet,**
daß die Laserstrahlen (12,13) zeitlich verschoben über das Objekt (3) geführt und daß die Meßergebnisse in einem gemeinsamen Kanal ausgewertet werden.

4. Verfahren nach Anspruch 2 oder 3,
dadurch **gekennzeichnet,**
daß der zeitliche Abstand zwischen aufeinanderfolgenden Messungen einer Meßserie in allen Richtungen unterschiedlich gewählt wird vom zeitlichen Abstand zwischen der letzten Messung einer Serie und der ersten Messung der nächsten Serie.

5. Verfahren nach Anspruch 4,
dadurch **gekennzeichnet,**
daß aus Laser-Lichtquellen (10,11), z.B. Halbleiter-Lasern, Laserstrahlen in einer gemeinsamen optischen Achse (22) von entgegengesetzten Seiten auf einen rotierenden, mehreckigen Spiegel (15) geführt werden, wobei die optische Achse (22) zur Drehachse (23) des Spiegels (15) exzentrisch liegt.

6. Meßvorrichtung zur Messung der Abmessung eines Objekts (3) in zwei Richtungen (x,y), mit einem Laserstrahl-Ablenkungsorgan, einem separaten Objektiv (8,9) für jeden in der zu messenden Richtung geführten Laserstrahl (12,13) und einer Auswerteeinrichtung für die Meßergebnisse,
**gekennzeichnet** durch
eine eigene Laser-Lichtquelle (10,11) für jeden Laserstrahl (12,13).

7. Vorrichtung nach Anspruch 6,
dadurch **gekennzeichnet,**
daß sich die Objektive (8,9) unmittelbar hinter Meßfenstern (5,6) befinden.

8. Vorrichtung nach Anspruch 6 oder 7,
**gekennzeichnet** durch
je eine Laser-Lichtquelle (10,11), z.B. Halbleiter-Laser, mit Kollimator für jede Meßrichtung (x,y).

9. Vorrichtung nach Anspruch 8,
dadurch **gekennzeichnet,**
daß je eine Laser-Lichtquelle (10,11), auf entgegengesetzten Seiten eines Ablenkorgans, z.B. eines drehbaren oder in Oszillation versetzbaren Spiegels (15) mit mindestens zwei gegenüberliegenden, spiegelnden Flächen angeordnet ist.

10. Vorrichtung nach einem der Ansprüche 6-9,
**gekennzeichnet** durch
eine Anordnung zur zeitlich verschobenen Ablenkung der Laserstrahlen (12,13) durch das Meßfeld.

## Claims

1. Method of measuring the dimension of an object (3) in two directions (x, y), wherein a respective laser beam (12, 13) is guided by a separate objective (8, 9) and is deflected in the direction to be measured via the object, and from the duration of interruption of the laser beam by the object its dimension is deduced. characterised in that each laser beam comes from an individual laser light source (10, 11).

2. Method according to claim 1, characterised in that the laser beams (12, 13) are guided via a common deflection element e.g. a rotating or oscillating mirror (15).

3. Method according to claim 1 or 2, characterised in that the laser beams (12, 13) are passed laterally displaced via the object (3) and in that the readings are evaluated in a common channel.

4. Method according to claim 2 or 3, characterised in that the time distance between consecutive measurements of a series of measurements is selected to be different in all directions from the time distance between the last measurement of a series and the first measurement of the next series.

5. Method according to claim 4, characterised in that from laser light sources (10, 11), e.g. semiconductor lasers, laser beams in a common optical axis (22) from opposite side are guided on to a rotating, polygonal mirror (15). the optical axis (22) lying eccentric to the axis of rotation (23) of the mirror (15).

6. Measuring device for measuring the dimension of an object (3) in two directions (x, y), having a laser beam deflection element, a separate objective (8, 9) for each laser beam (12, 13) guided in the direction to be measured and an evaluating device for the readings, characterised by an individual laser light source (10, 11) for each laser beam (12, 13).

7. Device according to claim 6, characterised in that the objectives (8, 9) are located directly behind measuring windows (5, 6).

8. device according to claim 6 or 7, characterised by a respective laser light source (10, 11), e.g. semiconductor laser, with a collimator for each measuring direction (x, y).

9. Device according to claim 8, characterised in that a respective laser light source (10, 11) is disposed on opposite sides of a deflecting element, e.g. a mirror (15) which rotates or can be set in oscillation and which has at least two opposite reflective surfaces.

10. Device according to one of claims 6-9, characterised by an arrangement for the laterally displaced deflection of the laser beams (12, 13) through the measuring field.

## Revendications

1. Procédé pour mesurer les dimensions d'un objet (3) dans deux directions (x, y), selon lequel on fait passer respectivement un faisceau laser (12, 13) dans un objectif séparé (8, 9) et on lui fait exécuter un balayage de l'objet dans la direction à mesurer et on déduit la dimension de l'objet à partir de la durée d'interruption du faisceau laser par ce dernier, caractérisé en ce que chaque faisceau laser est délivré par une source particulière de lumière laser (10, 11).

2. Procédé selon la revendication 1, caractérisé en ce que les faisceaux laser (12, 13) sont guidés au moyen d'un organe de déviation commun, par exemple un miroir rotatif ou un miroir oscillant (15).

3. Procédé selon la revendication 1 ou 2, caractérisé en ce que les faisceaux laser (12, 13) sont envoyés sur l'objet (3) d'une manière décalée dans le temps et que les résultats de mesure sont exploités dans un canal commun.

4. Procédé selon la revendication 2 ou 3, caractérisé en ce qu'on choisit l'intervalle de temps entre deux mesures successives d'une feuille de mesure dans toutes les directions, différent de l'intervalle de temps entre la dernière mesure d'une série et la première mesure de la série immédiatement suivante.

5. Procédé selon la revendication 4, caractérisé en ce que des faisceaux laser provenant de deux sources de lumière laser (10, 11), par exemple de lasers à semiconducteur, sont guidés sur un axe optique commun (22) à partir de côtés opposés, en direction d'un miroir polygonal rotatif (15), l'axe optique (22) étant excentré par rapport à l'axe de rotation (23) du miroir (15).

6. Dispositif de mesure servant à mesurer les dimensions d'un objet (3) dans deux directions (x, y) comportant un organe de déviation du faisceau laser, un objectif séparé (8, 9) pour chaque faisceau laser (12, 13) guidé dans la direction dans laquelle s'effectue la mesure, et un dispositif d'exploitation des résultats de mesure, caractérisé par une source particulière de lumière laser (10, 11) pour chaque faisceau laser (12, 13).

7. Dispositif selon la revendication 6, caractérisé en ce que les objectifs (8, 9) sont situés directement en arrière de fenêtres de mesure (5, 6).

8. Dispositif selon la revendication 6 ou 7, caractérisé par une source respective de lumière laser (10, 11), par exemple un laser à semiconducteurs, équipée d'un collimateur pour chaque direction de mesure (x, y).

9. Dispositif selon la revendication 8, caractérisé en ce que des sources respectives de lumière laser (10, 11) sont disposées sur les côtés opposés d'un organe de déviation, par exemple d'un miroir rotatif ou d'un miroir (15) pouvant être amené à osciller, possédant au moins deux surfaces réfléchissantes opposées.

10. Dispositif selon l'une des revendications 6-9, caractérisé par un dispositif servant à réaliser une déviation, décalée dans le temps, des faisceaux laser (12, 13) dans le champ de mesure.
